# EUROPEAN PATENT APPLICATION

(11) **EP 4 746 195 A1**
(43) Date of publication of application: **20.05.2026**
(21) Application number: 24854485.0
(22) Date of filing: 16.08.2024
(51) Int. Cl.: H01Q 1/24, H01Q 13/10, H01Q 5/30, H04M 1/02, H01Q 9/06

(54) **ELECTRONIC DEVICE INCLUDING SEGMENTED ANTENNA**

(30) Priority: 16.08.2023 KR 20230106981; 24.10.2023 KR 20230142746
(71) Applicant: Samsung Electronics Co., Ltd., Suwon-si, Gyeonggi-do 16677 (KR)
(72) Inventor: KIM, Byungjoon, Suwon-si Gyeonggi-do 16677 (KR); KANG, Euisung, Suwon-si Gyeonggi-do 16677 (KR); KIM, Sungsoo, Suwon-si Gyeonggi-do 16677 (KR); KIM, Yongyoun, Suwon-si Gyeonggi-do 16677 (KR); KIM, Eungwon, Suwon-si Gyeonggi-do 16677 (KR); OH, Chanhee, Suwon-si Gyeonggi-do 16677 (KR); JUNG, Minsu, Suwon-si Gyeonggi-do 16677 (KR)
(74) Representative: HGF
(86) International application number: PCT/KR2024/012217
(87) International publication number: WO 2025/037934

(57) **Abstract**

Disclosed is an electronic device including a side housing which may be used as an antenna. The side housing may include conductive members separated by a segment part. The conductive members may include protrusions and grooves, which are formed in regions adjacent to the segmented part. A first groove formed on a first end of a first conductive member may have a height different from that of a second groove formed on a second end of a second conductive member.

## Description

### TECHNICAL FIELD

Embodiments disclosed herein relate to an electronic device including segmented antennas.

### BACKGROUND

The electronic device may support various wireless communication protocols. Each of the wireless communication protocols may use, for example, a frequency band different from each other. In order to transmit and receive signals of a specific frequency band, the electronic device may include various antennas. The antennas may be configured to have resonance lengths corresponding to intended frequency bands. In order for the antennas to have different resonance lengths, the antennas may be segmented by segmentation portions. For example, the electronic device may include an antenna implemented using a metal portion formed in a housing. In order to transmit and receive signals in multiple bands, the housing may include a metal member segmented by the segmentation portions.

The foregoing information may be provided as related art for the purpose of assisting in understanding the present disclosure. No assertion or determination is made as to whether any of the foregoing may be applied as prior art with respect to the present disclosure.

### DISCLOSURE

### TECHNICAL SOLUTION

An electronic device according to an embodiment disclosed herein may include a housing, a printed circuit board disposed in an inner space, and at least one wireless communication circuitry. The housing may include a front plate, a rear plate, and a side member. The side member may be disposed between the front plate and the rear plate and may form the inner space of the electronic device along with the front plate and the rear plate. The side member may include a segmentation portion comprising a non-conductive material, a first conductive member, and a second conductive member. The first conductive member may include a first end adjacent to the segmentation portion and a plurality of first protrusion parts adjacent to the first end, the plurality of protrusion parts protruding toward the inner space. The second conductive member may include a second end adjacent to the segmentation portion and a plurality of second protrusion parts adjacent to the second end, the plurality of second protrusion parts protruding toward the inner space. The first conductive member may include a first hole penetrating the plurality of first protrusion parts along a first axis and a first groove disposed between the plurality of first protrusion parts. The second conductive member may include a second hole penetrating the plurality of second protrusion parts along the first axis and a second groove disposed between the plurality of second protrusion parts. At least a portion of the first groove may not overlap the second groove on the first axis. The at least one wireless communication circuitry may be configured to feed the first conductive member and/or the second conductive member.

According to an embodiment, the electronic device may include a first housing, a second housing, a hinge structure, a printed circuit board disposed in an inner space, and at least one wireless communication circuitry. For example, the first housing may include a first region of a front plate, a first rear plate, and a first side member disposed between the front plate and the first rear plate. The second housing may include a second region of the front plate, a second rear plate, and a second side member disposed between the front plate and the second rear plate. The first housing and the second housing may be rotatably coupled to the hinge structure. The first side member may include a segmentation portion comprising a non-conductive material, a first conductive member, and a second conductive member. The first conductive member may include a first end adjacent to the segmentation portion and a plurality of first protrusion parts adjacent to the first, the plurality of first protrusion parts protruding toward the inner space. The second conductive member may include a second end adjacent to the segmentation portion and a plurality of second protrusion parts adjacent to the second end, the plurality of second protrusion parts protruding toward the inner space. The first conductive member may include a first hole penetrating the plurality of first protrusion parts along a first axis and a first groove disposed between the plurality of first protrusion parts. The second conductive member may include a second hole penetrating the plurality of second protrusion parts along the first axis and a second groove disposed between the plurality of second protrusion parts. At least a portion of the first groove may not overlap the second groove on the first axis. The at least one wireless communication circuitry may be configured to feed the first conductive member and/or the second conductive member.

### BRIEF DESCRIPTION OF THE DRAWINGS

FIG. 1 illustrates a block diagram of an electronic device according to an embodiment.
FIG. 2 illustrates an antenna structure of an electronic device according to an embodiment.
FIG. 3A illustrates a front perspective view of an electronic device according to an embodiment.
FIG. 3B illustrates a rear perspective view of an electronic device according to an embodiment.
FIG. 3C illustrates an exploded perspective view of an electronic device according to an embodiment.
FIG. 4A illustrates a front perspective view of an electronic device in an unfolded state according to an embodiment.
FIG. 4B illustrates a rear view of an electronic device in an unfolded state according to an embodiment.
FIG. 4C illustrates a perspective view of an electronic device in a folded state according to an embodiment.
FIG. 5 illustrates a rear surface structure of an electronic device in an unfolded state according to an embodiment.
FIG. 6 illustrates an enlarged view of the first region of FIG. 5.
FIG. 7 illustrates a perspective view of the second region of FIG. 6.
FIG. 8 illustrates a schematic view of an end portion according to an embodiment.
FIG. 9 illustrates a segmentation portion according to an embodiment.
FIG. 10 illustrates a rear surface structure of an electronic device in an unfolded state according to an embodiment.
FIG. 11 illustrates a schematic view of an end portion according to an embodiment.
Fig. 12 is a block diagram illustrating an electronic device in a network environment according to various embodiments.

With regard to the description of the drawings, the same or similar components may be denoted by the same or similar reference numerals.

### DETAILED DESCRIPTION

Hereinafter, various embodiments of the present invention will be described with reference to the accompanying drawings. However, it should be understood that this is not intended to limit the present invention to a particular embodiment, and includes various modifications, equivalents, and/or alternatives of the embodiments of the present invention.

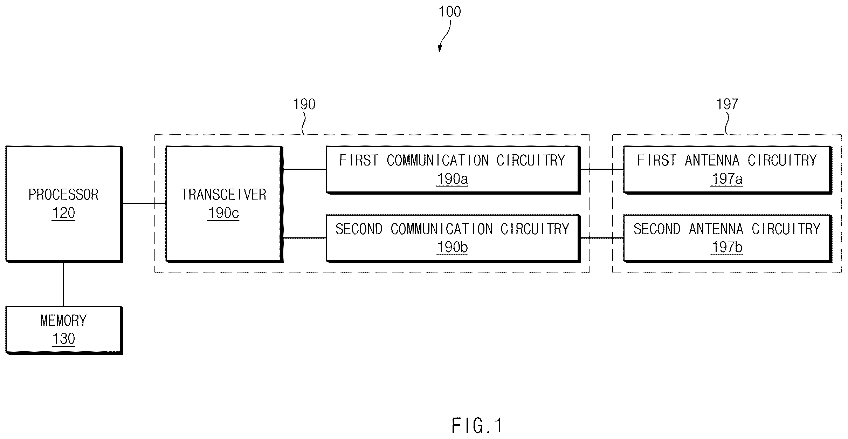

FIG. 1 illustrates a block diagram of an electronic device according to an embodiment.

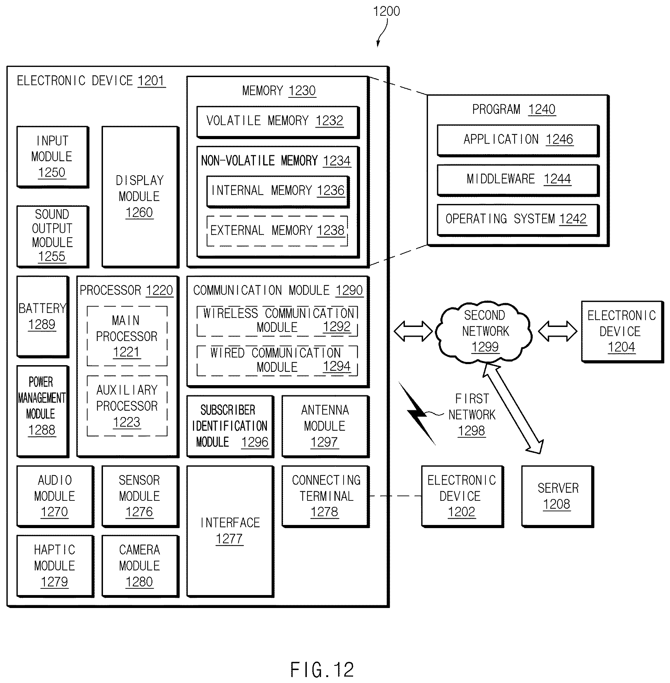

According to an embodiment, the electronic device 100 may include the processor 120, memory 130, a communication module 190, and/or an antenna module 197. For example, the electronic device 100 may correspond to the electronic device 1201 of FIG. 12. The structure of the electronic device 100 illustrated in FIG. 1 is illustrative, and embodiments of the disclosure are not limited thereto. For example, the electronic device 100 may further include a component not illustrated in FIG. 1 (e.g., a component of the electronic device 1201 of FIG. 12). For example, the electronic device 100 may not include at least some of the components illustrated in FIG. 1.

The processor 120 may include at least one processing circuitry. For example, the processor 120 may control various components of the electronic device 100 to perform various operations. For example, the processor 120 may correspond to the processor 1220 of FIG. 12. For example, operations of the electronic device 100 described below may be referred to as being performed by the processor 120. The processor 120 may perform various operations of the electronic device 100 by executing one or more instructions stored in the memory 130. The processor 120 may control the electronic device 100 to perform the various operations by executing the instructions stored in the memory 130. The processor 120 may include one processor or a plurality of processors. In an example, the processor 120 may be implemented as one chipset.

The processor 120 may include a baseband processor that processes baseband signals received from the communication module 190 or delivers baseband signals to the communication module 190. The processor 120 may be electrically, operatively, or functionally connected to the memory 130, the communication module 190, and/or the antenna module 197. In the disclosure, when one component is "operatively" connected to another component, the one component may be connected to enable the other component to operate. For example, the one component may enable the other component to operate by delivering a control signal to the other component directly or through another component. In the disclosure, when the one component is "functionally" connected to the other component, the one component may be connected so as to enable the other component to execute a function. For example, the one component may enabled the other component to execute a function by delivering a control signal to the other component directly or through another component.

For example, the memory 130 may be implemented as a single chip or chipset with the processor 120. For example, the memory 130 can be implemented as a separate chip from the processor 120. In one example, the memory 130 may correspond to the memory 1230 of FIG. 12. As described above, the memory 130 can store instructions executable by the processor 120.

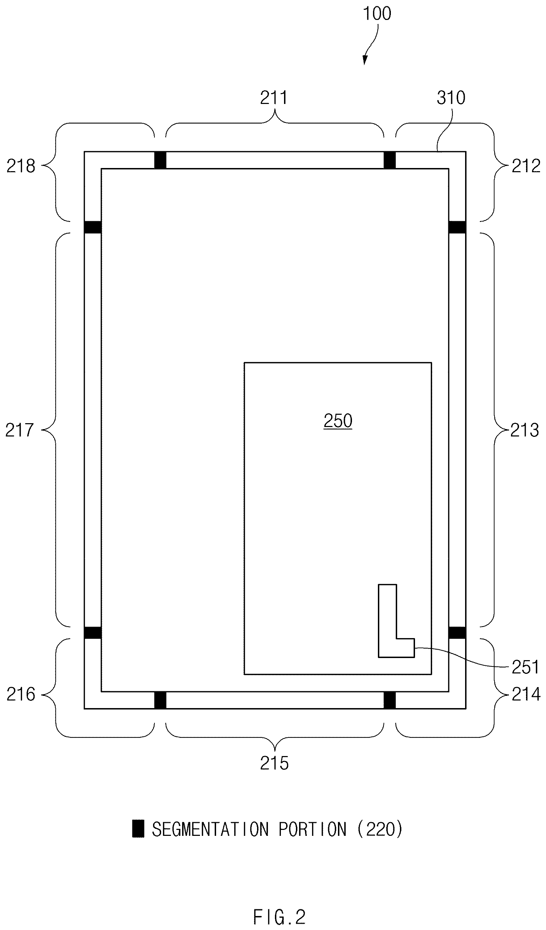

For example, the antenna module 197 may include a plurality of antennas. The antenna module 170 may include a plurality of radiators that may be used as antennas. For example, at least some of the plurality of antennas may include a portion of a housing (e.g., a portion of a side member) of the electronic device 100, a metallic pattern, a metallic radiator, and/or a conductive member. Examples of the antennas may be described below with reference to FIG. 2. The antenna module 197 may include tuning circuitry for tuning the antennas. In one example, the antenna module 198 may correspond to the antenna module 1297 of FIG. 12. In the disclosure, the term "antenna" may be referred to as antenna circuitry or a radiator (e.g., an antenna element). For example, the antenna circuitry may include a radiator, a feeding point at which a feeding unit is electrically connected to the radiator, a ground point at which a ground is connected to the radiator, a feeding unit, a feeding line between the feeding unit and the feeding point, and/or resonance circuitry configured to change a resonance length of the radiator.

The communication module 190 may include any components for transmitting and receiving wireless signals. For example, the communication module 190 may correspond to the wireless communication module 1292 of FIG. 12. The communication module 190 may receive signals by using the antenna module 197. The communication module 190 may convert a signal received by the antenna module 197 into a baseband signal, and may deliver the baseband signal to the processor 120. For example, the communication module 190 may transmit a signal by using the antenna module 197. The communication module 190 converts the baseband signal received from the processor 120 into a radio frequency signal, and may transmit the converted radio frequency signal through the antenna module 197. By controlling the communication module 190, the processor 120 may transmit and receive wireless signals.

According to an embodiment, the communication module 190 may include first communication circuitry 190a, second communication circuitry 190b, and/or a transceiver 190c. The configuration of the communication module 190 illustrated in FIG. 1 is an example, and embodiments of the disclosure are not limited thereto. For example, at least one switch and/or at least one duplexer configured to change connections between the communication circuitry and the transceiver 190c may be located between the communication circuitry (e.g., the first communication circuitry 190a and/or the second communication circuitry 190b) and the transceiver 190c. For example, the first communication circuitry 191a and the second communication circuitry 190b may be formed as a plurality of modules-independent modules. Although one transceiver 190c is illustrated in FIG. 1, embodiments of the disclosure are not limited thereto. For example, the transceiver 190c may include a first transceiver connected to the first communication circuitry 190a and a second transceiver (not illustrated) connected to the second communication circuitry 190b.

According to an embodiment, the antenna module 197 may include first antenna circuitry 197a and second antenna circuitry 197b. For example, the first antenna circuitry 197a may include a plurality of antenna radiators. For example, the first antenna circuitry 197a may further include at least one tuning circuitry connected to at least one of the plurality of antenna radiators. For example, the second antenna circuitry 197b may include a plurality of antenna radiators. For example, the second antenna circuitry 197b may further include at least one tuning circuitry connected to at least one of the plurality of antenna radiators. The configuration of the antenna module 197 illustrated in FIG. 1 is an example, and embodiments of the disclosure are not limited thereto. For example, at least one switch, at least one coupler, and/or at least one duplexer configured to change connections between the communication module 190 and the antenna module 197 may be located between the communication module 190 and the antenna module 197. In an example, the first antenna circuitry 197a and the second antenna circuitry 197b may share at least one antenna.

For example, the first communication circuitry 190a may be electrically connected to the first antenna circuitry 197a. The second communication circuitry 190b may be electrically connected to the second antenna circuitry 197b. The first communication circuitry 190a may perform processing (e.g., amplification, filtering, and/or phase shifting) on a signal to be transmitted via the first antenna circuitry 197a. The second communication circuitry 190b may perform processing (e.g., amplification, filtering, and/or phase shifting) on a signal to be transmitted via the second antenna circuitry 197b. The first communication circuitry 190a may perform processing (e.g., amplification, filtering and/or phase shifting) on a signal received via the first antenna circuitry 197a. The second communication circuitry 190b may perform processing (e.g., amplification, filtering, and/or phase shifting) on a signal received via the second antenna circuitry 197b. For example, each of the first communication circuitry 190a and the second communication circuitry 190b may include at least one of an amplifier, a low noise amplifier (LNA), at least one filter, a duplexer, a phase shifter, and/or a switch.

The transceiver 190c may, for example, perform processing on a baseband signal received from the processor 120. For example, the transceiver 190c may perform up-conversion, amplification, and/or filtering on the baseband signal. The transceiver 190c transmits a signal by delivering the processed signal to the first communication circuitry 190a and/or the second communication circuitry 190b. The transceiver 190c may process the signal based on a control signal from the processor 120.

The transceiver 190c, for example, may perform post-processing on a signal received from the first communication circuitry 190a and/or the second communication circuitry 190b. For example, the transceiver 190c may perform downconversion, amplification, and/or filtering on the received signal. The transceiver 190c may convert the received signal into a baseband signal and may deliver the baseband signal to the processor 120. The transceiver 190c may process a signal based on a control signal from the processor 120.

In one example, the first communication circuitry 190a and the second communication circuitry 190b may be communication circuitries for processing different frequency bands of the same wireless communication protocol. For example, the first communication circuitry 190a may be communication circuitry configured to process signals of a first frequency band of the first wireless communication protocol. For example, the second communication circuitry 190a may be communication circuitry configure to process signals of a second frequency band of the first wireless communication.

In one example, the first communication circuitry 190a may be communication circuitry for processing signals of a wireless communication protocols different from that of the second communication circuitry 190b. For example, the first communication circuitry 190a may be configured to process signals of a first wireless communication protocol, and the second communication circuitry 190b may be configured to process signals of a second wireless communication protocol.

The components of the wireless communication circuitry of the electronic device 100 illustrated in FIG. 1 are an example, and embodiments of the disclosure are not limited thereto. A person with ordinary skill in the art may understand that any structure including a plurality of antennas may be used for the electronic device 100.

FIG. 2 illustrates an antenna structure of an electronic device according to an embodiment.

Referring to FIG. 2, the electronic device 100 may include a plurality of antennas. At least one of the plurality of antennas illustrated in FIG. 2 may correspond to an antenna included in the antenna module 197 in FIG. 1. For example, at least one of the plurality of antennas shown in FIG. 2 may be included in the first antenna circuitry 197a and/or the second antenna circuitry 197b in FIG. 1.

For example, the electronic device 100 may include a housing 310. The housing 310 may include a side housing surrounding a space between a front surface (e.g., a display surface) and a rear surface of the electronic device 100. At least a portion of the housing 310 may be used as an antenna radiator. For example, the housing 310 may include a metallic member, and the metallic member may be electrically separated by a dielectric slit (e.g., a segmentation portion 220 of FIG. 2). A portion of the electrically separated metallic member may be used as an antenna. For example, at least one of portions (e.g., 211, 212, 213, 214, 215, 216, 217, and 218) of the housing 310 separated by the slit may be used as an antenna radiator.

For example, the electronic device 100 may include a substrate 250 located inside the housing 310. For example, a conductive pattern 251 may be located in or on the substrate 250. The conductive pattern 251 may be used as an antenna. The substrate 250 may include, for example, a printed circuit board (PCB), a flexible PCB (FPCB), or any substrate structure in the housing 310.

The antennas described with respect to FIG. 2 are an example, and embodiments of the disclosure are not limited thereto. For example, a metal plate on the rear surface of the display, a metallic pattern imprinted on the housing 310, or any metallic structure may be used as the antenna.

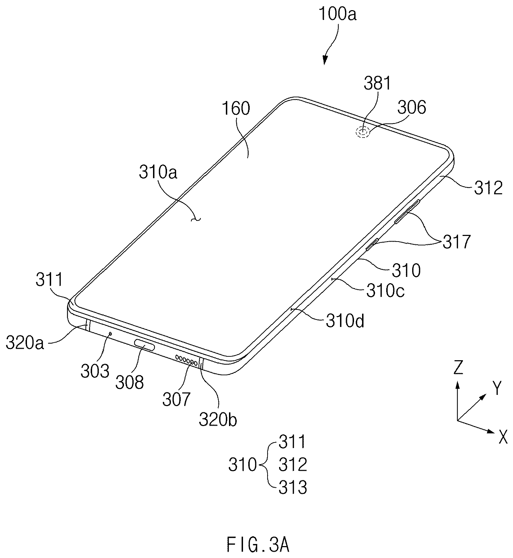

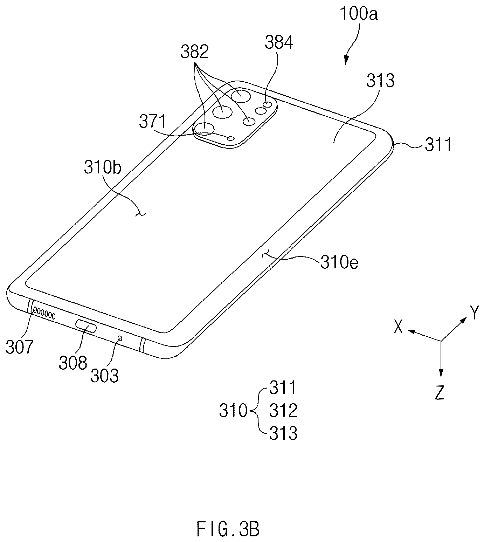

FIG. 3A illustrates a front perspective view of an electronic device according to an embodiment. FIG. 3B illustrates a rear perspective view of an electronic device according to an example embodiment.

Referring to FIGS. 3A and 3B, an electronic device 100a (e.g., the electronic device 100 of FIG. 1) according to an embodiment may include a housing 310 including a first surface (or, a front surface) 310a, a second surface (or, a rear surface) 310b, and a third surface (or, a side surface) 310c surrounding a space between the first surface 310a and the second surface 310b.

In an example, the housing 310 may include a front plate 311, a side member 312, and a rear plate 313. The first surface 310a may be formed by at least a portion of the front plate 311 (e.g., a glass plate or a polymer plate including various coating layers) of which at least a portion is substantially transparent. The second surface 310b may be formed by at least a portion of the rear plate 313. The rear plate 313 may be formed by, for example, a coated or colored glass, a ceramic, a polymer, a metal (e.g., aluminum, stainless steel, magnesium, or any alloy), or a combination of at least two of the foregoing materials. The third surface 310c may be formed by a side member 312 (e.g., a side bezel structure) that is coupled with the front plate 311 and the rear plate 312 and includes a metal and/or a polymer.

In the disclosure, one surface (e.g., the first surface 310a, the second surface 310b, and the third surface 310c) may not be formed by one physical component (e.g., the front plate 311, the rear plate 313, and the side member 312). In an example, the first surface 310a may be formed by portions of the front plate 311 and the side member 312. In an example, the third surface 310c may be formed by the side member 312 and at least a portion of a peripheral plate (e.g., the front plate 311 and/or the rear plate 313) coupled with the side member 312. In one example, the rear plate 313 and the side member 312 may be integrally formed and may include the same material (e.g., a metallic material such as aluminum).

In the illustrated embodiment, the front plate 311 may include a first area 310d that is bent and extends seamlessly from a partial area of the first surface 310a toward the rear plate 313. In an example, the first areas 310d may be located at both ends (e.g., relatively long edges) of the front plate 311. In the illustrated embodiment, the rear plate 313 may include second area 310e that are bent and extend seamlessly from a partial area the second surface 310b toward the front plate 302. The second areas 310e may be located at both ends (e.g., relatively long edges) of the rear plate 313. The first area 310d and the second area 310e may be referred to as areas having a curvature greater than 0 among areas adjacent to the side member 312. In an example, the electronic device 100a may not include the first area 310d and the first area 310e. In an embodiment, the front plate 311 (or the rear plate 313) may not include at least a portion of the first areas 310d (or the second areas 310e).

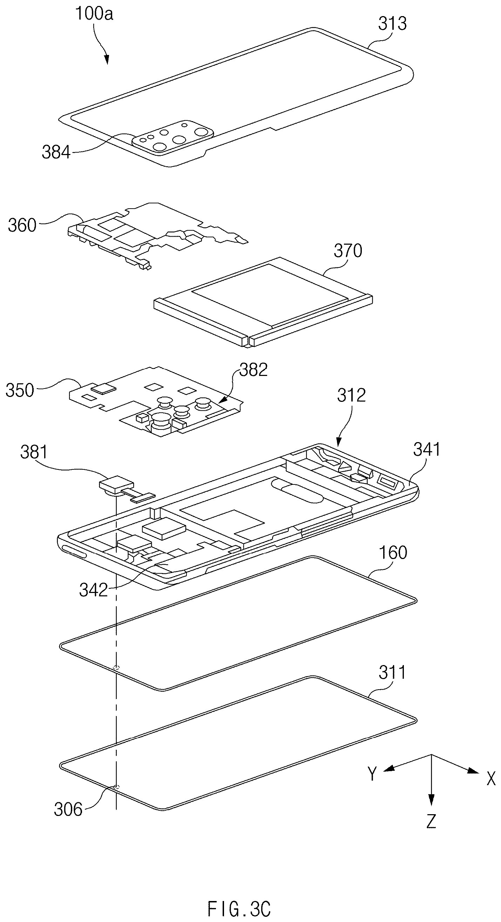

In an embodiment, a sidewall portion (e.g., the frame structure 341 in FIG. 3C) of the side member 312 may be formed to have different thicknesses depending on the side surface when viewed from the side of the electronic device 100a. For example, the sidewall portion of the side member 312 may have different thicknesses when viewed from the outside of the electronic device 100a depending on the side surface. When a long edge of the electronic device 100a is viewed (e.g., when viewed in the +X direction or the -X direction), the thickness of the sidewall portion of the side member 312 viewable from the outside may be a first thickness (e.g., a length on the Z-axis). When a short edge of the electronic device 100a is viewed (e.g.., when viewed in the +Y direction or the -Y direction), the thickness of the side member 312 viewable from the outside may be a second thickness (e.g., a length on the Z-axis) greater than the first thickness.

In an example, the side member 312 may include at least one segmentation portion (e.g., the segmentation portion 220 of FIG. 2). For example, the frame structure 341 of the side member 312 may form an outer side surface of the electronic device 100a and include at least one segmentation portion. In the example of FIG. 3, a first segmentation portion 320a, a second segmentation portion 320b, and a third segmentation portion 320c are illustrated, but the electronic device 100a may further include segmentation portions not illustrated. In an embodiment, the electronic device 100a may use at least a portion of the segmented side member 312 as an antenna. A portion of the side member 312 (e.g., the frame structure 341) segmented by the segmentation portion may be configured to transmit and receive signals of a specified frequency band.

In an embodiment, the electronic device 100a may include at least one of a display 160 (e.g., a display module 1260 of FIG. 12), camera modules 381 and 382 (e.g., the camera module 1280 of FIG. 12), a key input device 317 (e.g., the interface 1277 of FIG. 12), a light emitting element (not illustrated), audio holes 303, 307, and 371, and a connector hole 308 (e.g., the connecting terminal 178 in FIG. 1). In another embodiment, the electronic device 100a may omit at least one of the above components (e.g., the key input device 317 or the light emitting element (not illustrated)), or may additionally include another component.

In an embodiment, the display 160 may be visible from the outside through at least a portion of the front plate 311. For example, at least a portion of the display 160 may be visually exposed through the front plate 311 including the first areas 310d of the first surface 310a and the third surface 310c. The display 160 may be disposed on a rear surface (e.g., a surface facing the -z direction) of the front plate 311. In an example, the display 160 and the front plate 311 may be attached to each other to be configured as one module, and may also be referred to as a display module (e.g., the display module 160 of FIG. 12). In an example, an edge of the display 160 may be formed to be substantially the same as an adjacent peripheral shape of the front plate 311. In an embodiment, the surface of the housing 310 may include a screen display area formed as the display 160 is visually exposed. For example, the screen display area may include a first surface 310a and the first areas 310d at the sides. The screen display area may be referred to as an area on which a visual image may be displayed by the display 160. In an embodiment, at least a portion of the screen display area (e.g., at least a portion of the first surface 310a and the first area 310d) may include a sensing area (not illustrated) configured to obtain biometric information (e.g., a fingerprint) or a touch input of the user. In one example, the display 160 may include touch sensing circuitry, a pressure sensor capable of measuring the intensity (pressure) of a touch, and/or a digitizer that detects a stylus pen of a magnetic field type. In one example, the touch-sensitive circuitry, the pressure sensor, and/or the digitizer may be disposed adjacent to the display 160.

In an embodiment, at least one of an audio module (not illustrated), a sensor module (not illustrated), a camera module (e.g., the first camera module 381), and a light emitting element (not illustrated) may be disposed at a rear surface of the display 160. For example, the electronic device 100a may include the first camera module 381 (e.g., the camera module 1280 of FIG. 12) disposed at a rear surface (e.g., a surface facing the -z direction) of the first surface 310a (e.g., the front surface). For example, the first camera module 381 may be referred to as an under display camera (UDC). The first camera module 381 may be disposed below the display 160 to face the first surface 310a. In an example, the first camera module 381 may be configured to receive light through a transmissive area 306 of the display 160. The transmissive area 306 may be an area (e.g., an area having a relatively low pixel density) through which at least a portion of light passes.

In an embodiment, the second camera module 382 (e.g., the camera module 1280 of FIG. 12) may include a plurality of cameras (e.g., dual cameras, triple cameras, or quad cameras). However, the second camera module 382 is not necessarily limited to including a plurality of cameras, and may include one camera. For example, lenses of the second camera module 382 may be configured to receive external light through a camera area 384.

The audio holes may include, for example, the microphone holes 303 and 371 and the speaker hole 307. The positions and numbers of the audio holes illustrated in FIGS. 3A and 3C are an example, and embodiments of the disclosure are not limited thereto. In an embodiment, the speaker hole may include a receiver hole (not illustrated) for a call.

FIG. 3C illustrates an exploded perspective view of an electronic device according to an embodiment.

Referring to FIGS. 3A, 3B, and 3C, the electronic device 100a according to an embodiment may include the front plate 311, the display 160, the side member 312, a printed circuit board 350, a rear substrate 360, a battery 370, the rear plate 313, the first camera module 381, the second camera module 382, and antennas. The configurations of the electronic device 100a illustrated in FIG. 3C are illustrative, and embodiments of the disclosure are not limited thereto. For example, the electronic device 100a may not include at least some of the illustrated components (e.g., the rear substrate 360). The electronic device 100a may additionally include other components not illustrated in FIG. 3C.

In an embodiment, the front plate 311 and the display 160 may be coupled to the side member 312. For example, the front plate 311 and display 160 may be located in the +z-axis direction from the side member 311. For example, the display 160 may be coupled (or attached) to one surface of the side member 312 in the +z-axis direction, and the front plate 311 may be coupled (or attached) to one surface of a display 160 in the +z-axis direction. The front plate 311 may form a portion of the outer surface (or exterior) of the electronic device 100a. The display 160 may be disposed inside the electronic device 100a between the front plate 311 and the side member 312.

In an embodiment, the side member 312 may be disposed between the display 160 and the rear plate 313. The side member 312 may include a frame structure 341 forming a portion of a side surface (e.g., the third surface 310c of FIG. 3A) of the electronic device 100a and a plate structure 342 extending inward from the frame structure 341.

For example, the plate structure 342 may be disposed inside the frame structure 341 so as to be surrounded by the frame structure 341. The plate structure 342 may be physically connected to the frame structure 341, or may be integrally formed with the frame structure 341. The plate structure 342 may be formed of a metallic material and/or a non-metallic material (e.g., polymer). In an embodiment, the side member 312 may be referred to as a support member or a support structure configured to support components of the electronic device 100a. For example, the plate structure 342 may support other components included in the electronic device 100a. The plate structure 342, for example, may be referred to as a support member. For example, at least one of the display 160, the printed circuit board 350, the rear substrate 360, and the battery 370 may be disposed at the plate structure 342. For example, the display 160 may be coupled to one surface (e.g., a surface facing the +z-axis direction) of the plate structure 342, and the printed circuit board 350 may be coupled to a surface facing the opposite side of the one surface (e.g., a face facing the -z-axis direction). In an example, at least a portion of the plate structure 342 may be omitted from the electronic device 100a.

In an embodiment, the side member 312 (e.g., the frame structure 341) may be disposed to surround a space between the front plate 311 and the rear plate 312 to form a housing (e.g., the housing 310 of FIGS. 3A and 3B) of the electronic device 100a together with the front plate 311 and the rear plate 312.

In an embodiment, the rear substrate 360 may be disposed between the rear plate 312 and the plate structure 342. For example, the rear substrate 360 may be electrically connected to the printed circuit board 350. The rear substrate 360 may include at least one antenna or any electronic component. For example, the rear substrate 360 may include a near field communication (NFC) antenna, a wireless charging antenna, and/or a magnetic secure transmission (MST) antenna.

In an embodiment, a processor (e.g., the processor 120 of FIG. 1), memory (e.g., the memory 130 of FIG. 1), and/or an interface may be mounted on the printed circuit board 350. The processor may include, for example, one or more of a central processing unit, an application processor, a graphics processing unit, an image signal processor, a sensor hub processor, or a communication processor. The memory may include, for example, volatile memory or non-volatile memory. The interface may include, for example, a high-definition multimedia interface (HDMI), a universal serial bus (USB) interface, a secure digital (SD) card interface, and/or an audio interface. The interface may electrically or physically connect the electronic device 300 to an external electronic device, and may include a USB connector, an SD card/MMC (multimedia card) connector, or an audio connector.

In an embodiment, the battery 370 (e.g., the battery 1289 of FIG. 12) may supply power to at least one component of the electronic device 100a. For example, the battery 370 may include a non-rechargeable primary cell, a rechargeable secondary cell, or a fuel cell. At least a portion of the battery 370 may be disposed at substantially the same plane as the printed circuit board 350. The battery 370 may be integrally disposed in the electronic device 300, or may be detachably disposed from the electronic device 300.

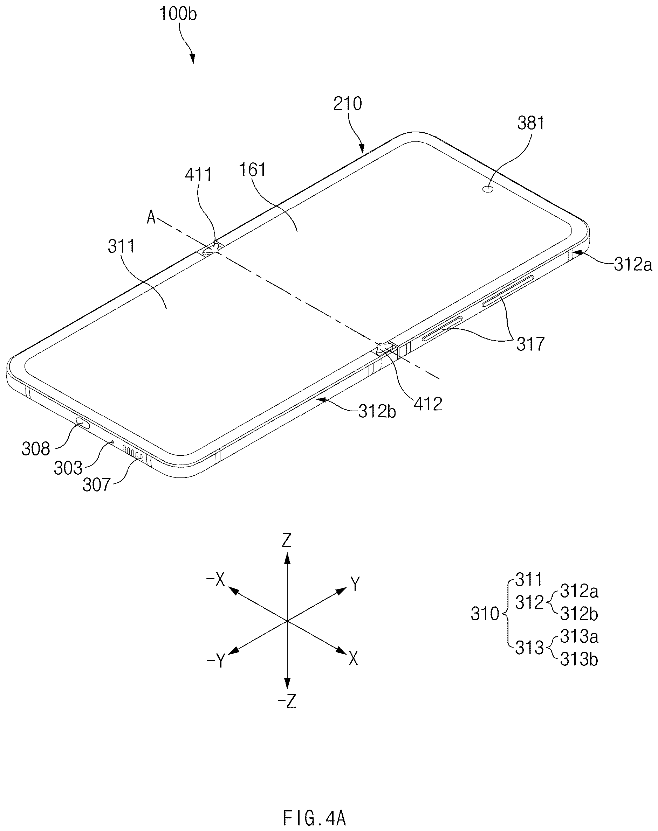

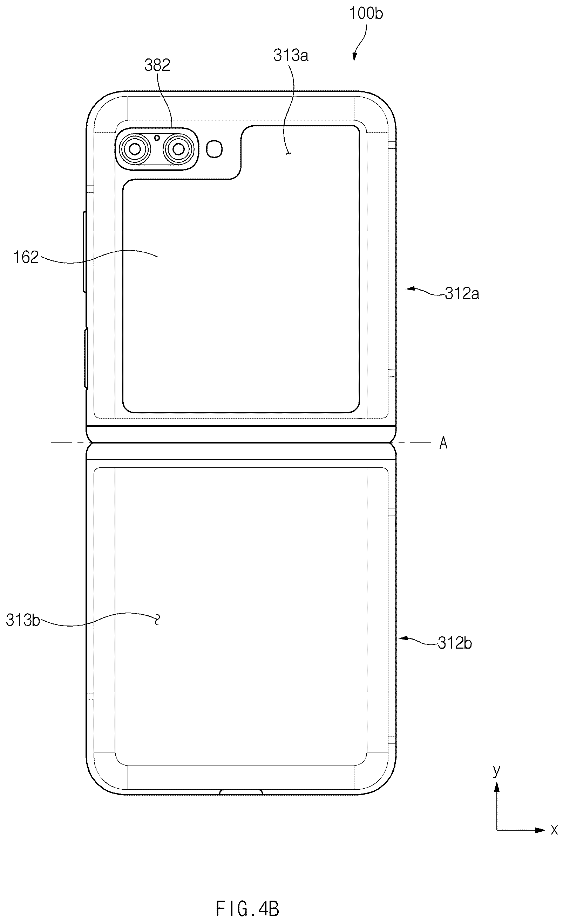

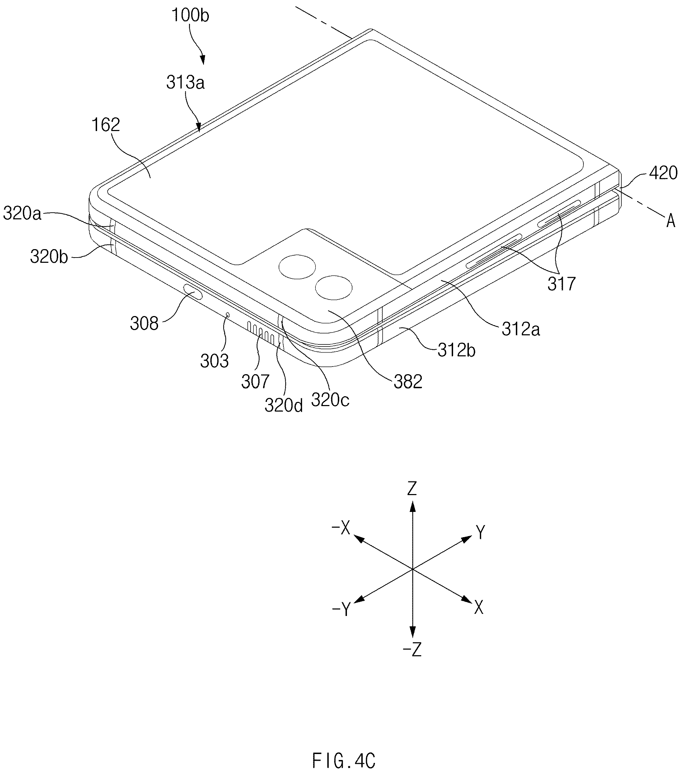

FIG. 4A illustrates a front perspective view of an electronic device in an unfolded state according to an embodiment. FIG. 4B illustrates a rear view of an electronic device in an unfolding state according to an embodiment. FIG 4C illustrates a perspective view of an electronic device in a folded state according to an embodiment.

Referring to FIGS. 4A, 4B, and 4C, according to an embodiment, the electronic device 100b (e.g., the electronic device 100 of FIG. 1) may be a foldable device in which at least a portion of the housing 310 is foldable. The electronic device 100b may be folded about the folding axis A. In the example of FIGS. 4A, 4B, and 4C, the electronic device 100b is illustrated as an in-fold device in which a first display 161 (e.g., the display module 1260 of FIG. 12) is folded to face each other in the folded state. However, embodiments of the disclosure are not limited thereto. For example, the electronic device 100b may be an out-fold device in which the first display 161 is folded to face the outside in the folded state. For convenience of description, with respect to FIGS. 4A, 4B, and 4C, descriptions of components having the same reference numerals as those of FIGS. 3A, 3B, and 3C may be referred to by the related descriptions of FIGS. 3A, 3B, and 3C unless otherwise described.

For example, the housing 310 of the electronic device 100b may include a front plate 311, a side member 312, and a rear plate 313. The side member 312 may include a first side member 312a and a second side member 312b, which are divided with respect to the folding axis A. The rear plate 313 may include a first rear plate 313a and a second rear plate 313b, which are divided with respect to the folding axis A. For example, the housing 310 may include a first housing and a second housing, which are divided with respect to the folding axis A. For example, the first housing may include a portion of the front plate 311 (e.g., the front plate 311 disposed in the +Y direction with respect to the folding axis A), the first side member 312a, and the first rear plate 313a. For example, the second housing may include a portion of the front plate 311 (e.g., the front plate 311 disposed in the -Y direction with respect to the folding axis A), the second side member 312b, and the second rear plate 313b. Hinge structures 411, 412, and 420 may be disposed between the first housing and the second housing. The hinge structures 411, 412, and 420 may include any structure that allows the housing 310 to be folded or unfolded about the folding axis A.

In the unfolded state of FIGS. 4A and 4B, the electronic device 100b may include a first display 161 disposed to face a front surface (e.g., a surface facing the +Z direction) of the electronic device 100b. In the unfolded state, the electronic device 100b includes a second display 162 (e.g., the display module 1260 of FIG. 12) disposed on a rear surface. The unfolded state may be referred to as an open state or a flat state. For example, the unfolded state may include a case in which an angle between the first side member 312a and the second side member 312b is equal to or greater than a specified angle (e.g., about 120 degrees).

In the folded state of FIG. 4C, the electronic device 100b may include the second display 162 disposed to face a front surface (e.g., a surface facing the +Z direction) of the electronic device 100b. The folded state may be referred to as a closed state. For example, the folded state may include a case in which an angle between the first side member 312a and the second side member 312b is less than a specified angle (e.g., about 60 degrees).

Although not illustrated in FIGS. 4A, 4B, and 4C, the electronic device 100b may be configured to have an intermediate state between the folded state and the unfolded state. For example, the intermediate state may be referred to as a flex state or a table mode. In the intermediate state, an angle between the first side member 312a and the second side member 312b may fall within a specified range (e.g., about 60 degrees or more and less than about 120 degrees).

The intermediate state (or, a flex state) is a state in which the first housing 210 and the second housing 220 are disposed at a predetermined angle as illustrated in FIG. 2D, and the electronic device 101 may not be in the unfolded state or the folded state. The intermediate state may mean a state in which the first housing 210 and the second housing 220 form a predetermined angle (e.g., 6 degrees or more and 80 degrees or less). Definitions of the intermediate state may exemplary and be differently applied according to various implementations.

As shown in FIG. 4C, the side member 312 may include a plurality of segmentation portions 320a, 320b, 320c, and 320d. As described above with respect to FIG. 2, the metal members of each side member separated by the segmentation portions may be used as antennas. As described above with respect to FIGS. 3A, 3B, and 3C, the side member 312 may include a frame structure that forms the exterior of the electronic device 100b and a plate structure coupled with the frame structure. The side member 312 may be referred to as a support member or a support structure configured to support the components of the electronic device 100b.

Various examples of the electronic device 100 of FIG. 1 have been described with reference to FIGS. 3A, 3B, 3C, 4A, and 4C. Hereinafter, embodiments of the disclosure will be described with reference to the structure of the electronic device 100b of FIGS. 4A, 4B, and 4C. However, a person having an ordinary skill in the art may understand that the structure of the embodiments described below may be applied to any electronic device. For example, the embodiments described below may be applicable to any electronic device including a segmentation portion in a housing and using segmented metal members as an antenna. For example, the structure of the segmentation portion described below may be applied to any segmentation portions 312a, 312b, or 312c illustrated in FIG. 3A. In the following disclosure, the term "side member" may refer to the side member 312 or a portion of the side member 312 (e.g., a frame structure).

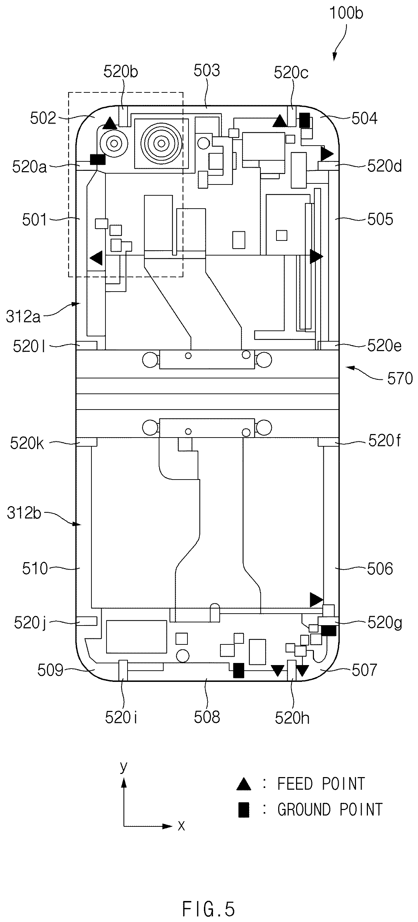

FIG. 5 illustrates a rear surface structure of an electronic device in an unfolded state according to an embodiment.

Referring to FIG. 5, according to an embodiment, the electronic device 100b may include a plurality of antennas (e.g., the antenna module 197 of FIG. 1). For example, the rear surface structure of the electronic device 100b illustrated in FIG. 5 may correspond to a state in which the rear plate 312 of FIG. 4B is removed.

According to an embodiment, the electronic device 100b may include a side housing (e.g., the side member 311 of FIG. 3). The side housing may be coupled to, for example, a hinge structure 570 or may be physically supported by the hinge structure 570. The side housing may include, for example, the first side member 312a and the second side member 312b. In an example, the side housing may be physically and/or electrically coupled to a support member (e.g., the plate structure 342 of FIG. 3C) inside the electronic device 100b.

The first side member 312a and the second side member 312b may include a plurality of segmentation portions 520a to 5201 (e.g., the segmentation portion 220 of FIG. 2). The first side member 312a and the second side member 312b may form a frame of the electronic device 100b. The frame may include a plurality of metal members (e.g., conductive members 501 to 510) coupled to the segmentation portions 520a to 5201. The plurality of segmentation portions 520a to 5201 may include, for example, a dielectric (e.g., a non-conductive member).

For example, the plurality of segmentation portions 520a to 5201 may be generated by generating segmentations in a metal frame through cutting process. For example, the plurality of segmentation portions may be generated by casting the metal frame such that the metal frame includes the segmentation portions. In an example, a non-conductive member may be filled in the plurality of segmentation portions 520a to 5201 through a process, such as an injection process. The non-conductive member located in the plurality of segmentation portions 520a to 5201 may be physically coupled with adjacent metal members. The physical rigidity between adjacent metal members may be increased by the non-conductive member.

The non-conductive member may electrically isolate adjacent metal members. Through the electrical isolation of the metal members, each of the metal members may be used as a radiator of one antenna. At least one feeding point may be formed in a metal member used for the antenna. The wireless communication circuitry (e.g., the communication module 190 of FIG. 1) of the electronic device 100b may transmit and receive signals corresponding to an electrical length or a resonance frequency of the metal member by feeding power to the metal member through the feeding point. In order to improve the radiation performance of the metal member, at least one feeding point may be formed on the metal member, or at least one tuning circuitry may be connected to the metal member. The feeding points and the ground points illustrated in FIG. 5 are an example, and embodiments of the disclosure are not limited thereto.

In an embodiment, the electronic device 100b may transmit and receive wireless signals corresponding to various bands and/or various wireless protocols using the side housing. For example, the first conductive member 501 may be configured to transmit and receive signals of a medium band and a high band (e.g., an n77 band and an n79 band) of a cellular network. A second conductive member 502 may be configured to transmit and receive signals according to a global positioning system (GPS) and/or Wi-Fi (e.g., a 2.4 GHz band and/or a 5 GHz band). The third conductive member 503 may be configured to transmit and receive signals of a middle band and/or a low band of the cellular network. The fourth conductive member 504 may be configured to transmit and receive signals of a high band (e.g., an n77 band) of the cellular network and/or signals according to Wi-Fi (e.g., a 2.4 GHz band and/or a 5 GHz band). The fifth conductive member 505 may be configured to transmit and receive signals of a low band, a medium band, and/or a high band of the cellular network. The sixth conductive member 506 may be configured to transmit and receive signals of a medium band and/or a high band (e.g., an n77 band and an n79 band) of the cellular network. The seventh conductive member 507 may be configured to transmit and receive signals of a low-band and/or high-band of the cellular network. The eighth conductive member 508 may be configured to transmit and receive low-band and/or medium-band signals of the cellular network.

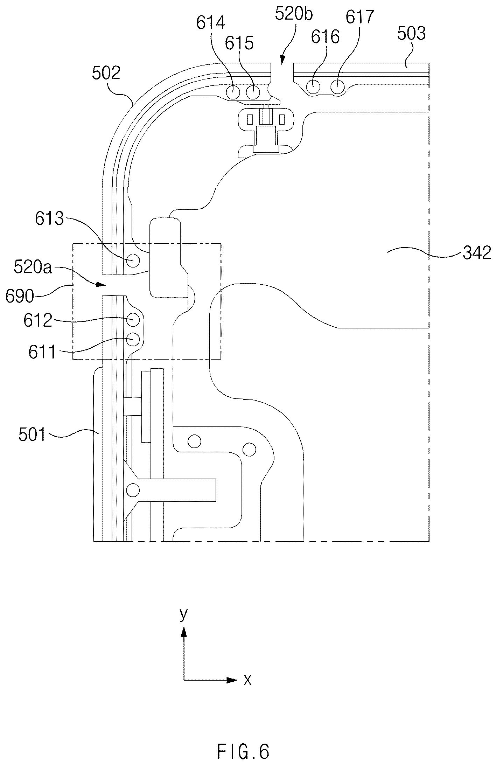

Hereinafter, a segmentation structure according to an embodiment of the disclosure will be described with reference to FIGS. 6 to 8. In FIGS. 6 to 8, a segmentation structure is described with reference to a first area (a dotted area of FIG. 5), but the segmentation structure described below may be applied to any segmentation portion among the segmentation portions of the electronic device 100b.

FIG. 6 illustrates an enlarged view of the first region of FIG. 5.

Referring to FIG. 6, according to an embodiment, the first conductive member 501 and the second conductive member 502 may be physically separated by a segmentation portion 520a. The second conductive member 502 and the third conductive member 503 may be physically separated by segmentation portion 520b. In the example of FIG. 6, it may be assumed that non-conductive members located in the segmentation portions 520a and 520b are omitted. For example, each of the first conductive member 501, the second conductive member 502, and the third conductive member 503 may be at least partially physically coupled to the plate structure 342. For example, each of the first conductive member 501, the second conductive member 502, and the third conductive member 503 may be at least partially electrically connected to the plate structure 342 through at least one point. In an example, at least a portion of the plate structure 342 may be formed of a conductive material to form a ground region together with a substrate (not illustrated).

When two conductive members are separated by a segmentation portion, capacitive coupling may occur on adjacent surfaces of the two conductive members. For example, such capacitive coupling may be represented as a capacitive load on the conductive members. The capacitive load may increase as the size of the facing surfaces of the adjacent conductive members increases, and as the distance between the conductive members decreases. As the capacitive load increases, antenna performance (e.g., gain and/or bandwidth) of the conductive members may deteriorate. In addition, a noise signal induced in the conductive members may increase as the capacitive load increases. Since a non-conductive member is located in a slit between the conductive members, the slit between the conductive members may be visually exposed to the outside. Due to the visual exposure of the conductive members and/or the reduction in size of the electronic device 100b, the size of the slit may be limited. According to an embodiment of the disclosure, the electronic device 100b may reduce the size of the capacitive coupling between the adjacent conductive members. The electronic device 100b may improve the antenna performance of the electronic device 100b by reducing the capacitive coupling.

At least one hole (e.g., holes 611 to 617) may be formed in one end of the conductive member. For example, the hole may be referred to as a through hole or a link hole. The first conductive member 501 may include a protrusion in which holes 611 and 612 are formed. The second conductive member 502 may include a hole 613 formed in a protrusion at one end adjacent to the first conductive member 501. The second conductive member 502 may include holes 614 and 615 formed in a protrusion at one end that is adjacent to the third conductive member 503. The third conductive member 503 may include holes 616 and 617 formed in a protrusion at one end that is adjacent to the second conductive member 502.

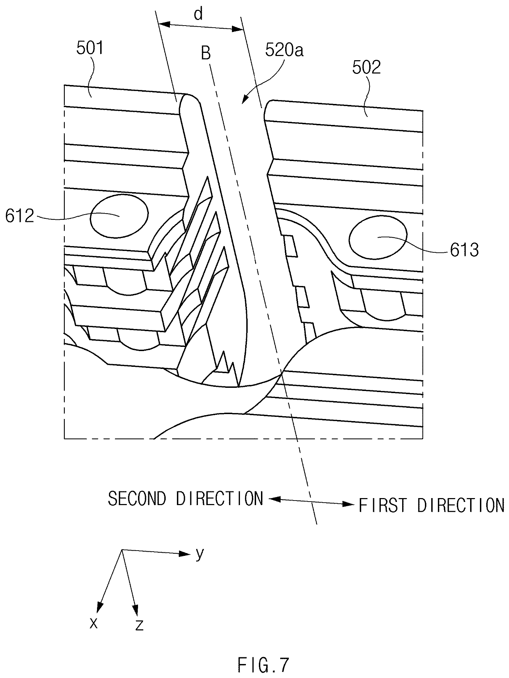

A non-conductive member (not illustrated) may be coupled to the slits 520a and 520b and the holes (e.g., the holes 611 to 617). For example, the non-conductive member may be coupled to the slit 520a and the holes 611, 612, and 613. In this case, the first conductive member 501 and the second conductive member 502 may be physically coupled to each other through the non-conductive member. When the non-conductive member is coupled to the holes 611, 612, and 613 at adjacent ends of both the conductive members, rigidity of a side member including the first conductive member 501, and the second conductive member 503 may be increased. For example, the holes 611, 812, and 613 may be filled with the non-conductive member. The holes 611, 622, and 613 may be, for example, filled with the non-conductive members through an injection molding process. To form the holes 611, 412, and 613, the first conductive member 502 and the second conductive member 501 may include protrusions (e.g., portions formed to protrude in the +x direction). According to an embodiment, the electronic device 100b may include the protrusions set such that surfaces facing each other are reduced. Hereinafter, a structure of the protrusions may be described with reference to FIG. 7 with respect to a second area 690.

FIG. 7 illustrates a perspective view of the second region of FIG. 6.

Referring to FIGS. 6 and 7, according to an embodiment, the electronic device 100b may include a plurality of grooves formed at a first end of the first conductive member 501 and a plurality of grooves formed at a second end of the second conductive member 502. For example, the plurality of grooves formed at the first end and the plurality of grooves formed at the second end may be configured to reduce an area of a surface on which the first end and the second end face each other (e.g., an area of ends overlapping each other on an x-z plane). In various embodiments of the disclosure, the groove may be referred to as a recess or a cavity. By coupling a non-conductive member to the grooves at adjacent ends of both the conductive members, rigidity of a side member including the first conductive member 501 or the second conductive member 502 may be increased. For example, the grooves may be filled with the non-conductive member. The non-conductive member may be filled in the grooves and/or the holes 611, 612, and 613 through, for example, an injection process.

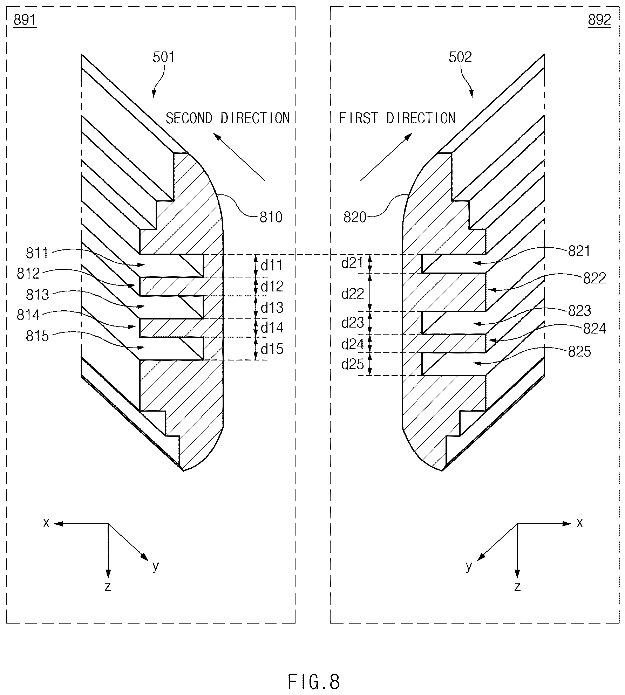

For example, by reducing the area of the surface on which the first end and the second end face each other while the distance between the first end and the second end is limited to d, the size of the capacitive coupling between the first conductive member 501 and the second conductive member 502 may be reduced. Hereinafter, the shape of the grooves may be described in more detail with reference to FIG. 8.

FIG. 8 illustrates a schematic view of an end portion according to an embodiment.

Referring to FIGS. 6, 7, and 8, according to an embodiment, the first conductive member 501 and the second conductive member 502 may include protrusions having different heights. For example, reference numeral 891 illustrates a first end 810 of the first conductive member 501 when viewed in the second direction about the axis B of FIG. 7. Reference numeral 892 illustrates a second end 820 of the second conductive member 502 when viewed in the first direction about the axis B of FIG 7. In the example of FIG. 8, holes (e.g., holes 611, 612, and 614 of FIG. 7) are omitted for convenience of description, but a person having ordinary skill in the art may understand that holes for coupling may be located in the protrusions.

In an example, the first conductive member 501 may include a plurality of grooves formed at the first end 810. The plurality of grooves formed at the first end 810 of the first conductive member 501 may be formed in a direction (e.g., the -x direction) from the inside to the outside of the electronic device 100b. The plurality of grooves may be formed, for example, through machining of the first end 810 of the first conductive member 501. In an example, the first conductive member 501 may include a first groove 811, a second groove 813, and a third groove 815 formed at the first end 810.

In an example, the second conductive member 502 may include a plurality of grooves formed at the second end 820. The plurality of grooves formed at the second end 820 of the second conductive member 502 may be formed in a direction (e.g., the - x direction) from the inside to the outside of the electronic device 100b. The plurality of grooves may be formed, for example, through machining at the second end 820 of the second conductive member 502. In an example, the second conductive member 502 may include a fourth groove 821, a fifth groove 823, and a sixth groove 825 formed at the second end 820.

According to an embodiment, at least a portion of the grooves of the first end 810 and the grooves of the second end 820 may be formed at different heights (e.g., heights on the z axis). For example, by varying the heights (e.g., height on the z axis) of the machining with respect to the second end 820 and the first end 810, the heights between the grooves may be formed differently. The height may be referred to as, for example, a center height of a groove on the z axis. By varying the heights of the grooves, a size of a surface (e.g., a surface overlapping on the x-z plane) on which the first end 810 and the second end 820 face each other may be reduced.

In an example, the first conductive member 501 may include a plurality of protrusions formed at the first end 810. The plurality of protrusions formed at a first end 810 of the first conductive member 501 may be formed in a direction (e.g., the +x direction) from the outside to the inside of the electronic device 100b. The plurality of protrusions can be formed, for example, through machining of the first end 810 of the first conductive member 501. In an example, the first conductive member 501 may include a first protrusion 812 and a second protrusion 814 formed at the first end 810. As described above with respect to FIGS. 6 and 7, the holes 611 and 612 can be formed at the first protrusion 812 and the second protrusion 814.

In an example, the second conductive member 502 may include a plurality of protrusions formed at the second end 820. The plurality of protrusions formed at the second end 820 of the second conductive member 502 may be formed in a direction (e.g., the +x direction) from the outside toward the inside of the electronic device 100b. The plurality of protrusions may be formed, for example, through machining of the second end 820 of the second conductive member 502. In an example, the second conductive member 502 may include a third protrusion 822 and a fourth protrusion 823 formed at the second end 820. As described above with respect to FIGS. 6 and 7, the hole 613 may be formed at the third protrusion 822 and the fourth protrusion 824.

According to an embodiment, at least a portion of the protrusions of the first end 810 and the protrusions of the second end 820 may be formed at different heights (e.g., heights on the z axis). The heights may be referred to as, for example, center heights of the protrusions on the z axis. By varying the heights of the protrusions, the size of a surface (e.g., a surface overlapping on the x-z plane) on which the first end 810 and the second end 820 face each other may be reduced.

In the above disclosure, the heights of the protrusions or grooves have been described, but in one example, the thickness (e.g., length on the z-axis) of the protrusions and/or grooves may be different. By setting the thickness of the protrusions and/or groove differently, the height of the protrusions or the grooves may be formed differently.

In the example of FIG. 8, a thickness d11 (e.g., the length on the z-axis) of the first groove 811 may be about 0.5 mm (millimeter). A thickness d12 of the first protrusion 812 may be about 0.4 mm. A thickness d13 of the second groove 813 may be about 0.5 mm. A thickness d14 of the second protrusion 814 may be about 0.4 mm. A thickness d15 of the third groove 815 may be about 0.5 mm. A thickness d21 of the fourth groove 821 may be about 0.5 mm. A thickness d22 of the third protrusion 812 may be about. 0.9 mm. A thickness d23 of the fifth groove 823 may be about 0.5 mm. A thickness d24 of the fourth protrusion 824 may be about 0.5 mm. A thickness d25 of the sixth groove 825 may be about 0.5 mm.

In the example of FIG. 8, since the grooves of the first end 810 and the second end 820 are formed to have different heights, the size of the surface on which the first end 810 and the second end 820 face each other may be reduced. For example, in the example of FIG. 8, the capacitive load may be reduced by about 7% compared to the example in which the grooves are formed to have the same heights.

The shapes of the first end 810 and the second end 820 described above in connection with FIG. 8 is an example, and embodiments of the disclosure are not limited thereto. For example, the number of protrusions and/or grooves formed may be different from the example of FIG. 8. The height and/or thickness of the protrusions and/or grooves may be different from the example of FIG 8. A person with ordinary skill in the art may understand that any shapes of grooves that can reduce the size of the facing surface of the first end 810 and second end 820 may be included in embodiments of the disclosure.

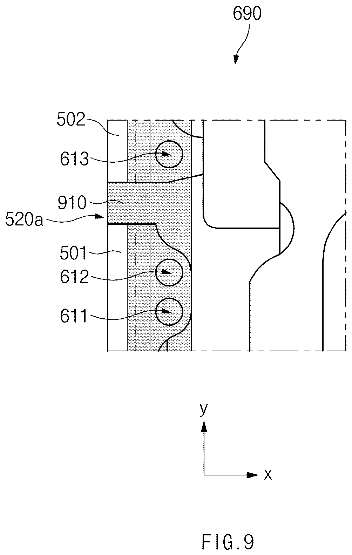

FIG. 9 illustrates a segmentation portion according to an embodiment.

Referring to FIGS. 5, 6, 7, 8, and 9, according to an embodiment, the electronic device 100b may include a non-conductive member disposed at the segmentation portion. For example, the non-conductive member may be coupled to adjacent conductive members by being filled at the segmentation portion. The non-conductive member may be filled in the segmentation portion through, for example, an injection process.

A non-conductive member 910 may be located at the segmentation portion 520a between the first conductive member 501 and the second conductive member 502. For example, the non-conductive member 910 may be physically coupled with the first conductive member 501 and the second conductive member 502. The non-conductive member 910 may be coupled to the segmentation portion 520a and the holes 611, 612, and 613. As described above with respect to FIG. 8, because the non-conductive member 910 is physically coupled to the holes 611, 612, and 613 formed at the protrusions, the physical coupling strength between the first conductive member 501 and the second conductive member 502 may be increased. Further, the grooves and protrusions formed at the first conductive member 501 or the second conductive member 502 may be physically coupled with the non-conductive member 910. As described above with respect to the segmentation portions 220 of FIG. 2, the non-conductive member 910 may electrically isolate the first conductive member 501 from the second conductive member 502. In the disclosure, the non-conductive member 910 may include any dielectric (e.g., a polymer).

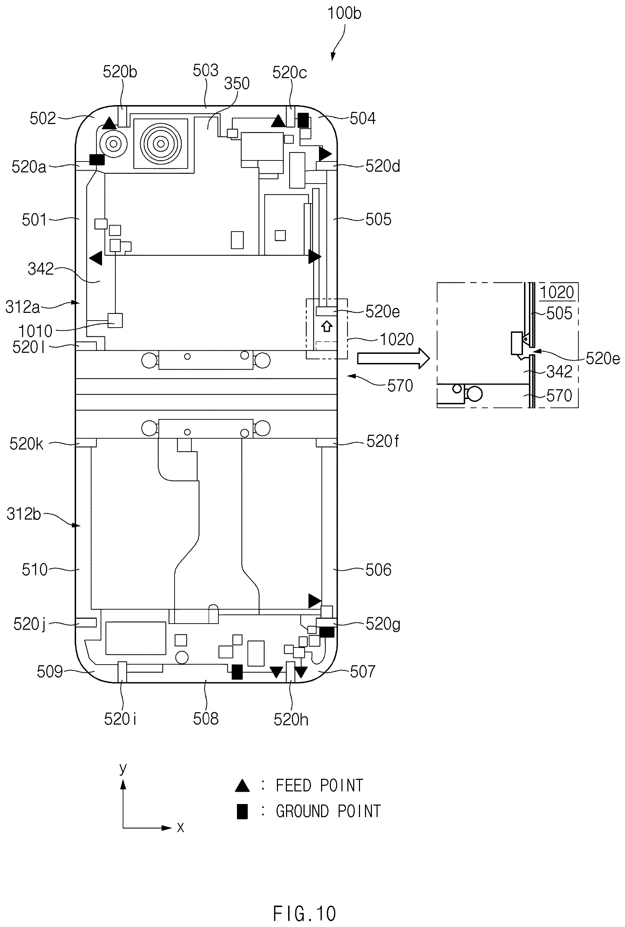

FIG. 10 illustrates a rear surface structure of an electronic device in an unfolded state according to an embodiment.

Referring to FIG. 10, according to an embodiment, the electronic device 100b may further include tuning circuitry 1010. The printed circuit board 350 may be coupled to, for example, the plate structure 342. The plate structure 342 may be referred to as a structure inside the electronic device 100b that is physically coupled to or integrally formed with a side member (e.g., the side member 312 of FIG. 5).

For example, the tuning circuitry 1010 may be electrically connected to one point of the first conductive member 501. The tuning circuitry 1010 may be electrically connected to the printed circuit board 350. The tuning circuitry 1010 may be controlled according to control of a wireless communication module (e.g., the communication module 190 of FIG. 1) disposed at the printed circuit board 350. For example, the tuning circuitry 1010 may include at least one switch and/or at least one lumped element. The tuning circuitry 1010 may be configured to change a resonant frequency characteristic of the first conductive member 501 using the at least one switch and/or the at least one lumped element. In an example, the tuning circuitry 1010 may be physically coupled to the plate structure 342 or the printed circuit board 350.

According to an embodiment, the electronic device 100b may change the frequency characteristic of the first conductive member 501 by using the tuning circuitry 1010. For example, the electronic device 100b, by changing the frequency characteristic, may receive a low-band signal through the first conductive member 501. In this case, the mid-band reception sensitivity of the first conductive member 501 may be increased. In addition, in the folded state of the electronic device 100b, the low-band coverage for the three sides of the electronic device 100b may be achieved by the first conductive member 501, the third conductive member 503, and the sixth conductive member 506.

According to an embodiment, the electronic device 100b may include the fifth conductive member 505 having a reduced length compared to FIG. 5. For example, the electronic device 100b is configured to receive a high-band, a mid-band, or a low-band signal using the conductive member 501 and receive a high-band and a mid-band signal using the fifth conductive member 505. When a low-band signal is not received, the length (e.g., the length on the y-axis) of the fifth conductive member 505 may be reduced. Referring to the enlarged view of a third area 1020, as the length of the fifth conductive member 505 decreases, the position of the segmentation portion 520e may move in the +y direction. In this case, the plate structure 342 coupled to the hinge structure 570 may be extended in the +y direction according to the change in the position of the segmentation portion 520e. As the area of the plate structure 342 increases, for example, the heat dissipation efficiency of the electronic device 100b may be increased. Heat generated inside the electronic device 100b may be dissipated to the outside of the electronic device 100b through the hinge structure 570 and the plate structure 342 (e.g., a plate formed of a metallic material).

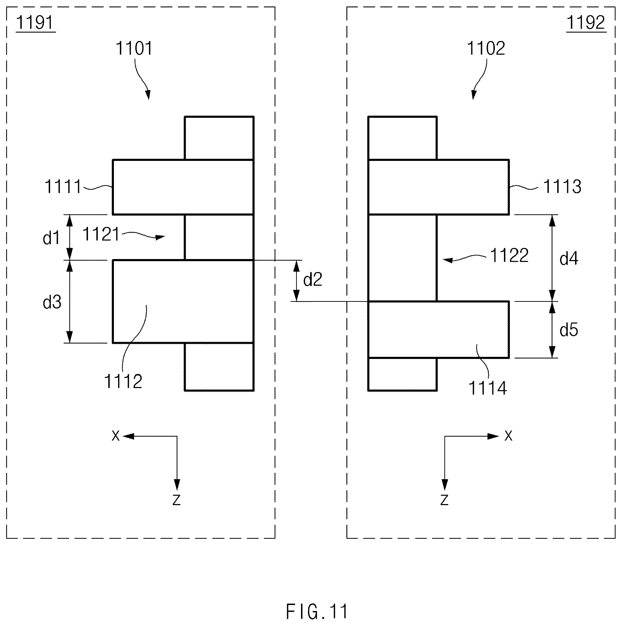

FIG. 11 illustrates a schematic view of an end portion according to an embodiment.

Referring to FIGS. 5 and 11, according to an embodiment, the electronic device 100b may include grooves, formed at the segmentation portion, with different thicknesses. In the example of FIG. 8, the grooves are illustrated as having the same thickness, but embodiments of the disclosure are not limited thereto. In the example of FIG. 11, a reference numeral 1191 may indicate a shape corresponding to the first end 1101 (e.g., the first end 810 of FIG. 8), and a reference numeral 1192 may indicate a shape corresponding to the second end 1102 (e.g., the second end 820 of FIG. 8).

The first groove 1121 between the first protrusion 1111 and the second protrusion 1112 may have a thickness d1. The second groove 1122 between the third protrusion 1113 and the fourth protrusion 1114 may have a thickness d4. As illustrated in FIG. 11, the thicknesses of the first groove 1121 and the second groove 1122 may be set differently. For example, by setting the thicknesses of the grooves differently, the size of the surface on which the first end 1101 and the second end 1102 face each other may be reduced. As an example, the thickness at which the second protrusion 1112 with the thickness d3 and the fourth protrusion 1114 with the thickness d5 overlap on the z-axis may be reduced by d2.

Referring to FIGS. 8 and 11, a person with ordinary skill in the art may understand that by varying the height of the groove and/or the protrusion, or by varying the thickness of the groove and/or the protruding portion, the size of the surface on which the first end and the second end face each other may be reduced.

Fig. 12 is a block diagram illustrating an electronic device 1201 in a network environment 1200 according to various embodiments.

Referring to Fig. 12, the electronic device 1201 in the network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module(SIM) 1296, or an antenna module 1297. In some embodiments, at least one of the components (e.g., the connecting terminal 1278) may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to one embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thererto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to one embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth^{™}, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 1264dB or less) for implementing mMTC, or U-plane latency (e.g., 0.5ms or less for each of downlink (DL) and uplink (UL), or a round trip of 12ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element composed of a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mm Wave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

According to an embodiment, the electronic device 1200 (e.g., the electronic device 100 of FIG. 1, the electronic device 100a of FIGS. 3A, 3B, and 3C, or the electronic device 100b of FIGS. 4A, 4B, and 4C) may include a housing (e.g., the housing 310 of FIGS. 3A, 3B, 3C, 4A, 4B, and 4C), a printed circuit board (e.g., the printed circuit board 350 of FIG. 4C or 10) disposed in an internal space, and at least one wireless communication circuitry (e.g., the communication module 1290, the communication circuitry 190 of FIG. 1). For example, the housing may include a front plate (e.g., the front plate 311 of FIGS. 3A, 3B, and 3C), a rear plate (e.g., the rear plate 313 of FIGS. 3A, 3B, and 3C, or the first and second rear plates 313a and 313b of FIGS. 4A, 4B, and 4C), and a side member (e.g., the side member 312 of FIGS. 3A, 3B, 3C, 4A, 4B, 4C, and 5, or the first and second side members 312a and 312b of FIGS. 4A, 4B, and 4C). The side member may be disposed between the front plate and the rear plate and form an internal space of the electronic device together with the front plate and the rear plate.

According to an embodiment, the electronic device 1200 (e.g., the electronic device 100b of FIGS. 4A, 4B, and 4C) may include a first housing, a second housing, a hinge structure (e.g., the hinge structure 570 of FIG. 5 or 10), a printed circuit board (e.g., the printed circuit board 350 of FIG. 4C or 10) disposed in an internal space, and at least one wireless communication circuitry (e.g., the communication module 1290 or the communication circuitry 190 of FIG. 1). For example, the first housing may include a first area (e.g., an area disposed in the +Y direction with respect to the axis A of FIG. 4A) of a front plate (e.g., the front plate 311 of FIG. 4A), a first rear plate (e.g., the first rear plate 313a of FIGS. 4A, 4B, and 4C), and a first side member (e.g., the first side member 312a of FIGS. 4A, 4B, and 4C) disposed between the front plate and the first rear plate. For example, the second housing may include a second area (e.g., an area disposed in the -Y direction with respect to the axis A of FIG. 4A) of the front plate, a second rear plate (e.g., the second rear plate 313b of FIGS. 4A, 4B, and 4C), and a second side member (e.g., the second side member 312b of FIGS. 4A, 4B, and 4C) disposed between the front plate and the second rear plate. The first housing and the second housing may be rotatably coupled to the hinge structure.

In an example, the side member (e.g., the side member 312 of FIGS. 3A, 3B, and 3C or the first side member 312a of FIGS. 4A, 4B, and 4C) of the electronic device (e.g., the electronic devices 100, 100a, 100b, and 1201) may include a segment portion (e.g., the segment 520a of FIGS. 5, 6, 7, 9, or 10) including a non-conductive material (e.g., the non-conductive material 910 of FIG. 9), a first conductive member (e.g., the first conductive member 501 of FIGS. 5 to 10), and a second conductive member (e.g., a second conductive member 502 of FIGS. 5 to 11).

For example, the first conductive member may include a first end (e.g., the first end 810 of FIG. 8) adjacent to the segment portion and a plurality of first protrusions (e.g., the first protrusion 812 and the second protrusion 814 of FIG. 8) adjacent to the first end and protruding toward the internal space. The first conductive member may include a first hole (e.g., the hole 612 of FIG. 7) passing through the plurality of first protrusions along a first axis and a first groove (e.g., the second groove 813 of FIG. 8) disposed between the plurality of first protrusions.

For example, the second conductive member may include a second end (e.g., the second end 820 of FIG. 8) adjacent to the segment portion and a plurality of second protrusions (e.g., the third protrusion 822 and the fourth protrusion 824 of FIG. 8) adjacent to the second end and protruding toward the internal space. The second conductive member may include a second hole (e.g., the hole 613 of FIG. 7) passing through the plurality of second protrusions along the first axis and a second groove (e.g., the fifth groove 823 of FIG. 8) disposed between the plurality of second protrusions.

For example, the first axis may be perpendicular to the front plate and the rear plate (e.g., the first rear plate). At least a portion of the first groove may not overlap the second groove and the first axis. The first groove and the second groove may be formed in a direction from an inner space of the electronic device toward the outside.

For example, the first conductive member may further include a third groove (e.g., the first groove 811 of FIG. 8) disposed between the plurality of first protrusions, and the second conductive member may further include a fourth groove (e.g., the fourth groove 821 of FIG. 8) disposes between the plurality of second protrusions. The third groove and the fourth groove may overlap on the first axis.

For example, a segment may be interposed between the first end and the second end. The segment, the first groove, the second groove, the first hole, and the second hole may be filled with a non-conductive material (e.g., the non-conductive material 910 of FIG. 9). The non-conductive material may be configured to provide physical coupling between the first conductive member and the second conductive member and electrical isolation between the first conductive member and the second conductor. The first conductive member, the second conductive member, and the non-conductive material may form a continuous outer surface of the electronic device.

At least one wireless communication circuitry may be configured to supply power to the first conductive member and/or the second conductive member. In an example, the electronic device may further include a tuning circuitry (e.g., the tuning circuitry 1010 of FIG. 10) electrically connected to the first conductive member. The at least one wireless communication circuitry may be formed to change a frequency characteristic of the first conductive member by using the tuning circuitry. For example, the at least one wireless communication circuitry may be made to transmit and/or receive signals of a cellular network by using the first conductive member. The at least single wireless communication circuitry may be made to transmit signals of a global positioning system (GPS) and/or signals of Wi-Fi by using the second conductive member.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100, 100a, 100b, 1201) comprising:
a housing (310) comprising a front plate (311), a rear plate (313, 313a, 313b), and a side member (312, 312a, 312b) disposed between the front plate and the rear plate, the side member, along with the front plate and the rear plate, forming an inner space of the electronic device;
a printed circuit board (PCB, 350) disposed in the inner space; and
at least one wireless communication circuitry (190, 1290) disposed at the PCB,
wherein the side member comprises:
a segmentation portion (220, 520a) comprising a non-conductive material (910),
a first conductive member (501) comprising a first end (810) adjacent to the segmentation portion and a plurality of first protrusion parts (822, 824) adjacent to the first end, and
a second conductive member (502) comprising a second end (820) adjacent to the segmentation portion and a plurality of second protrusion parts (822, 824) adjacent to the second end,
wherein the at least one wireless communication circuitry is configured to feed the first conductive member and/or the second conductive member,
wherein the first conductive member comprises a first hole (612) penetrating the plurality of first protrusion parts and a first groove (813) positioned between the plurality of first protrusion parts,
wherein the second conductive member comprises a second hole (613) penetrating the plurality of second protrusion parts and a second groove (823) positioned between the plurality of second protrusion parts,
wherein at least a part of the first conductive member extends from the first end along a first axis,
wherein at least a part of the second conductive member extends from the second end along the first axis, and
wherein at least a part of the first groove is not overlapped with the second groove on a second axis perpendicular to the first axis.

2. The electronic device of claim 1, wherein the segmentation portion (220, 520a) is interposed between the first end (810) and the second end (820).

3. The electronic device of claim 1, wherein the second axis is perpendicular to the front plate (311) and the rear plate (313).

4. The electronic device of claim 1, wherein the first groove (813) and the second groove (823) are formed in a direction towards an exterior of the electronic device from the inner space.

5. The electronic device of claim 1, wherein the non-conductive material (910) is filled in the segmentation portion (520a), the first groove (813), the second groove (823), the first hole (611, 612), and the second hole (613).

6. The electronic device of any one of claims 1 to 5, wherein the non-conductive material (910) is configured to provide a physical coupling between the first conductive member (501) and the second conductive member (502) and to provide an electrical isolation between the first conductive member and the second conductive member.

7. The electronic device of any one of claims 1 to 5, wherein the first conductive member, the second conductive member, and the non-conductive material form a continuous exterior surface of the electronic device.

8. The electronic device of any one of claims 1 to 5,
wherein the first conductive member further comprises a third groove (811) positioned between the plurality of first protrusion parts,
wherein the second conductive member further comprises a fourth groove (821) positioned between the plurality of second protrusion parts, and
wherein the third groove is overlapped with the fourth groove on the first axis.

9. The electronic device of any one of claims 1 to 5, further comprising tuning circuitry (1010) electrically connected to the first conductive member and configured to adjust frequency characteristics of the first conductive member,
wherein the at least one wireless communication circuitry is configured to adjust the frequency characteristics of the first conductive member using the tuning circuitry.

10. The electronic device of any one of claims 1 to 5, wherein the at least one wireless communication circuitry is configured to:
transmit and/or receive signals of cellular networks using the first conductive member, and
transmit and/or receive signals of GPS (Global Positioning System) and/or signals of Wi-Fi (Wireless-Fidelity).

11. An electronic device (100b, 1201) comprising:
a first housing comprising a first area of a front plate (311), a first rear plate (313a) and a first side member (312a) disposed between the front plate and the first rear plate;
a second housing comprising a second area of a front plate, a second rear plate (313b) and a second side member (312b) disposed between the front plate and the second rear plate;
a hinge structure (570) where the first housing and the second housing are rotatably coupled to;
a printed circuit board (PCB, 350) disposed in an inner space of the first housing; and
at least one wireless communication circuitry (190, 1290) disposed at the PCB,
wherein the first side member comprises:
a segmentation portion (220, 520a) comprising a non-conductive material,
a first conductive member (501) comprising a first end (810) adjacent to the segmentation portion and a plurality of first protrusion parts (812, 814) protruding towards the inner space, the plurality of first protrusion parts being adjacent to the first end, and
a second conductive member (502) comprising a second end (820) adjacent to the segmentation portion and a plurality of second protrusion parts (822, 824) protruding toward the inner space, the plurality of second protrusion parts being adjacent to the second end,
wherein the at least one wireless communication circuitry is configured to feed the first conductive member and/or the second conductive member,
wherein the first conductive member comprises a first hole (612) penetrating the plurality of first protrusion parts along a first axis and a first groove (813) positioned between the plurality of first protrusion parts,
wherein the second conductive member comprises a second hole (613) penetrating the plurality of second protrusion parts (823) along the first axis and a second groove positioned between the plurality of second protrusion parts, and
wherein at least a part of the first groove is not overlapped with the second groove on the first axis.

12. The electronic device of claim 11, wherein the segmentation portion is interposed between the first end and the second end.

13. The electronic device of claim 11, wherein the first axis is perpendicular to the front plate and the first rear plate.

14. The electronic device of claim 11, wherein the first groove and the second groove are formed in a direction towards an exterior of the electronic device from the inner space.

15. The electronic device of claim 11, wherein the non-conductive material is filled in the segmentation portion, the first groove, the second groove, the first hole, and the second hole.
